# EUROPÄISCHE PATENTSCHRIFT

(11) **EP 3 065 512 B1**
(45) Veröffentlichungstag und Bekanntmachung des Hinweises auf die Patenterteilung: **12.12.2018**
(21) Anmeldenummer: 16000464.4
(22) Anmeldetag: 25.02.2016
(51) Int. Cl.: H05B 37/02, H05B 33/08, B64D 11/00

(54) **ANSTEUERUNG VON FARBLEUCHTEN MIT EINEM HELLIGKEITSKANAL**
CONTROL OF COLOUR LIGHTS WITH A BRIGHTNESS CHANNEL
COMMANDES D'ECLAIRAGE DE COULEUR COMPRENANT UN CANAL DE LUMINANCE

(30) Priorität: 03.03.2015 DE 102015002639
(43) Veröffentlichungstag der Anmeldung: 07.09.2016
(73) Patentinhaber: Diehl Aerospace GmbH, 88662 Überlingen (DE)
(72) Erfinder: Schevardo, Dirk-Achim, 90552 Röthenbach (DE); Renz, Marc, 91126 Schwabach (DE); Dobler, Stefan, 91077 Neunkirchen am Brand (DE)
(74) Vertreter: Diehl Patentabteilung

(56) Entgegenhaltungen:
- WO-A1-2011/106661
- DE-A1-102006 028 670
- DE-A1-102010 043 013
- DE-U1-202009 011 690

## Beschreibung

Die Erfindung betrifft eine Beleuchtungsanordnung. Die Beleuchtungsanordnung weist einen Steuereingang auf. Über diesen Steuereingang wird eine Steuervariable an die Beleuchtungsanordnung übergeben bzw. in diese eingespeist. Die Steuervariable kann hierbei mehrere Steuerwerte annehmen. Die Beleuchtungsanordnung weist eine Leuchte auf, welche zur Erzeugung von Licht geeignet ist. Das Licht wird hierbei in Abhängigkeit der Steuerwerte erzeugt. Die angesprochene Beleuchtungsanordnung ist also einkanalig ansteuerbar.

Derartige Beleuchtungsanordnungen sind hinlänglich aus vielen Umgebungen, z.B. aus Innenräumen von Fahrzeugen bekannt, so z.B. aus der Passagierkabine eines Flugzeugs. Die Leuchte ist dabei eine Leuchte zur Erzeugung einfarbigen, im Wesentlichen weißen Lichts. Die Steuervariable ist eine Helligkeitsvariable. Die mehreren Steuerwerte sind dann verschiedene Helligkeitswerte, z.B. im Bereich von 0% bis 100%. Die Leuchte erzeugt dann Licht mit einer Helligkeit gemäß der Helligkeitsvariablen. Die Leuchte wird anhand Einspeisung der Helligkeitsvariablen angeschaltet - d.h. die Leuchte leuchtet mit maximal möglicher Helligkeit - oder ausgeschaltet oder auf Zwischen-Helligkeiten gedimmt.

Oft besteht der Wunsch, in einer derartigen Umgebung Mehrfarbleuchten einsetzen zu können. Mehrfarbleuchten erzeugen Licht verschiedener Farben bei jeweils verschiedenen Helligkeiten. Sie benötigen daher mehrere, mindestens zwei Steuervariablen zu deren Ansteuerung, nämlich z.B. eine Farbvariable, die mehrere Farbwerte annehmen kann, um die Farbe des von der Mehrfarbleuchte erzeugten Lichts zu steuern sowie eine Helligkeitsvariable, die mehrere Helligkeitswerte annehmen kann, um die Helligkeit des von der Mehrfarbleuchte erzeugten Lichts der gewählten Farbe zu steuern.

Hinlänglich bekannt ist es, die Umgebung mit einem mehrkanaligen Licht-Steuersystem auszurüsten, das zu jeder der Mehrfarbleuchten führt, um diese jeweils mit den genannten Steuervariablen (z.B. Farbort, Helligkeit, Sättigung) zu versorgen.

In entsprechenden Umgebungen, z.B. Flugzeugen, sind jedoch oft bisher nur einkanalige Licht-Steuersysteme vorhanden. Um das Licht-Steuersystem auf mehrere Kanäle, die in der Regel zur Helligkeitssteuerung verwendet werden, umzurüsten, müsste unter Umständen die zugehörige Verkabelung ausgetauscht werden, was einen hohen Aufwand bedeutet. Insbesondere in Flugzeugen muss hier neben der Hardware auch entsprechende Software ausgetauscht werden, wenn das Licht-Steuersystem als DatenbusSystem realisiert ist.

Aus der WO 2011/106661 A1 ist ein Verfahren zum Betreiben einer Beleuchtungseinrichtung mit einer Vielzahl von diskreten Beleuchtungsquellen mit unterscheidbar unterschiedlichen Farbkoordinaten bekannt. Das Verfahren umfasst das Bestimmen von Zielfarbkoordinaten und einem Lichtstrom, bei dem die Beleuchtungseinrichtung zu betreiben ist, das Bestimmen elektrischer Leistungs-Eingangswerte für jede der Vielzahl der diskreten Beleuchtungsquellen, die im Wesentlichen die Zielfarbkoordinaten und den Lichtstrom erzeugen, indem sie sich auf eine Kalibrier-Daten-Nachschlagetabelle beziehen, die Kalibrierdaten auf der Grundlage von Messungen der Vielzahl von diskreten Beleuchtungsquellen enthält, das Bestimmen einer Farbmischzone, definiert durch drei unterscheidbar unterschiedliche Farbkoordinaten der Vielzahl der diskreten Beleuchtungsquellen, innerhalb der die Zielfarbkoordinaten liegen entsprechend der Kalibrierdaten, Bestimmen von Lichtstromverhältnissen für jede der Vielzahl der diskreten Beleuchtungsquellen bestimmt werden, die eine der drei unterscheidbar unterschiedlichen Farbkoordinaten aufweisen, die die Farbmischzone definieren, die im Wesentlichen die Zielfarbkoordinaten erzeugt.

Aus der DE 10 2010 043 013 A1 ist eine Beleuchtungsvorrichtung bekannt, die eine Leuchtquellenanordnung und eine Steuereinrichtung aufweist. Die Leuchtquellenanordnung weist eine erste Weißlichtquelle und eine zweite Weißlichtquelle auf. Eine Farbtemperatur von der ersten Weißlichtquelle ist verschieden zu einer Farbtemperatur der zweiten Weißlichtquelle. Die Steuereinrichtung ist ausgebildet, um basierend auf einem Eingangssignal ein erstes Ansteuersignal für die erste Weißlichtquelle der Leuchtquellenanordnung und ein zweites Ansteuersignal für die zweite Weißlichtquelle der Leuchtquellenanordnung bereitzustellen, so dass eine Gesamtfarbtemperatur und eine Gesamthelligkeit einer von der Leuchtquellenanordnung abgegebenen Strahlung mittels des Eingangssignals einstellbar sind.

Aus der DE 20 2009 011 690 U1 ist ein Beleuchtungskörper mit erweiterter Dimmfunktion bekannt. Bei einem Beleuchtungskörper mit einer Dimmervorrichtung können sowohl die Helligkeit, als auch die Farbsättigung des abgestrahlten Lichts mit denselben Bedienelementen der Dimmervorrichtung eingestellt werden.

Aufgabe der Erfindung ist es, eine verbesserte Beleuchtungsanordnung anzugeben.

Die Aufgabe wird gelöst durch eine Beleuchtungsanordnung gemäß Patentanspruch 1, ein Fahrzeug gemäß Patentanspruch 8 und ein Verfahren zum Umrüsten eines Fahrzeugs gemäß Patentanspruch 10. Bevorzugte oder vorteilhafte Ausführungsformen der Erfindung ergeben sich aus den Unteransprüchen, der nachfolgenden Beschreibung sowie den beigefügten Figuren.

Die erfindungsgemäße Beleuchtungsanordnung für einen Innenraum eines Fahrzeugs mit einer Licht-Steuer Infrastruktur mit mehreren Steuerausgängen zum jeweiligen Anschluss einer oder mehrerer Beleuchtungsanordnungen und mit einer Bedieneinheit zum Wählen bzw. Verändern einer Steuervariablen, wobei an jedem der Steuerausgänge die Steuervariable zur Verfügung stellbar ist, weist einen Steuereingang auf wobei der Steuereingang an den Steuerausgang anschließbar ist. Über diesen Steuereingang wird eine einzige Steuervariable an die Beleuchtungsanordnung übergeben bzw. in diese eingespeist. Die einzige Steuervariable kann hierbei mehrere Steuerwerte annehmen. Die Beleuchtungsanordnung weist eine Leuchte auf, welche zur Erzeugung von Licht geeignet ist. Das Licht wird hierbei in Abhängigkeit der Steuerwerte erzeugt. Die angesprochene Beleuchtungsanordnung ist also einkanalig ansteuerbar.

Die Leuchte des erfindungsgemäßen Beleuchtungssystems ist eine Mehrfarbleuchte. Die Mehrfarbleuchte weist eine Eingangsschnittstelle auf. Die Eingangsschnittstelle dient zur Einspeisung einer Farbvariablen und einer Helligkeitsvariablen. Die Farbvariable kann mehrere Farbwerte annehmen, die Helligkeitsvariable kann mehrere Helligkeitswerte annehmen. Das Beleuchtungssystem enthält außerdem eine Steuereinheit. Die Steuereinheit weist den Steuereingang und eine Ausgangsschnittstelle auf. Die Ausgangsschnittstelle dient zur Ausgabe der Farbvariablen und der Helligkeitsvariablen und ist mit der Eingangsschnittstelle der Mehrfarbleuchte verbunden. Die Steuereinheit ist dazu ausgebildet, einen am Steuereingang empfangenen Steuerwert anhand einer Abbildungsvorschrift sowohl einen Helligkeitswert als auch einen Farbwert zuzuordnen und diese als Werte der entsprechenden Variablen an der Ausgangsschnittstelle auszugeben, um diese an die Mehrfarbleuchte zu übermitteln.

Die Mehrfarbleuchte dient also zur Erzeugung von Licht mindestens zweier unterschiedlicher Farben bei jeweils mindestens zwei unterschiedlichen Helligkeiten gemäß Farbwert und Helligkeitswert an der Eingangsschnittstelle. Die Mehrfarbleuchte kann jedwede Lichtquelle zur Erzeugung derartigen Lichts sein, z.B. eine Mehrfarb-LED bzw. -LED-Kombination, -OLED bzw. -OLED-Kombination usw. Die Eingangs- und Ausgangsschnittstellen können Datenschnittstellen, z.B. Bus-Schnittstellen zum Austausch von Daten, das heißt von Helligkeits- oder Farbwerten sein. Alternativ können die Schnittstellen jedoch auch z.B. zwei diskrete Leitungen sein, um Farb- und Helligkeitswerte digital oder analog über die jeweilige Leitung zu übertragen. Der Farbwert ist beispielsweise ein Wertetripel, z.B. ein RGB- (Rot, Grün, Blau) oder ein YUV- (Farbsättigung Y und Farbort U,V) Wert.

Die Steuereinheit bildet ein eigenes, separates oder in die Leuchte integriertes Adaptermodul für die Mehrfarbleuchte, welches zwischen die Mehrfarbleuchte und den Steuereingang beziehungsweise ein den Steuereingang speisendes Bauteil geschaltet wird, beispielsweise einen Steuerausgang eines Licht-Steuersystems. Auch der Steuereingang kann entsprechend zu oben eine Datenschnittstelle oder ein Eingang für eine oder mehrere diskrete Leitungen sein. Beispielsweise können über zwei den Steuereingang bildende Leitungen, die jeweils als 1-bit-Binärleitung betrieben werden (Versorgungsspannung liegt an / keine Spannung liegt an), insgesamt vier Steuerwerte der Steuervariablen binär übertragen werden.

Die Erfindung beruht auf folgenden Überlegungen: Leuchten zur Erzeugung ausschließlich einfarbigen, insbesondere weißen Lichts, sogenannte Einfarb-Leuchten, benötigen nur einen einzigen Helligkeitsregler beziehungsweise Helligkeitskanal zu deren vollständiger Ansteuerung. Mehrfarbleuchten benötigen zusätzlich zur Helligkeitsinformation bei ihrer Ansteuerung eine Farbinformation. Die Farbinformation ist z.B. ein Wertetripel für RGB-Farbanteile oder für Farbsättigung und Farbort in einem Farbraum. Falls nun Farbleuchten in einer Umgebung eingesetzt werden sollen, in dem nur eine Licht-Steuerung für die Helligkeit einer Einfarb-Leuchte vorhanden ist, wie zum Beispiel in älteren Flugzeugkabinen, kann dort beim Einsatz einer Mehrfarbleuchte zwar ebenfalls deren Helligkeit gesteuert werden, die Farbe jedoch nicht verändert bzw. gesteuert werden. Diese muss z.B. an der Leuchte fest eingestellt werden. Über die Steuerung kann dann wieder nur die Helligkeit der Mehrfarbleuchte verändert werden.

Gemäß der Erfindung ist es dagegen möglich, eine Mehrfarbleuchte weiterhin unter Verwendung der gegebenen Hardware durch eine einzige Steuervariable anzusteuern, jedoch werden jeweilige anliegende Steuerwerte über eine Abbildungsvorschrift auf jeweilige Wertepaare eines bestimmten Helligkeitswertes und eines bestimmten Farbwertes abgebildet. Die entsprechende Zuordnung kann dabei völlig beliebig erfolgen. Im Ergebnis steht je nach Anzahl verfügbarer Steuerwerte dieselbe Anzahl von Farb-/Helligkeits-Wertepaaren zur Verfügung, um die Mehrfarbleuchte variantenreich mit verschiedenen Farben und Helligkeiten betreiben zu können.

Die Abbildungsvorschrift kann dabei beliebig gestaltet werden. In der Abbildungsvorschrift können daher gewünschte Kombinationen von Farbe und Helligkeit der Mehrfarbleuchte zur Verfügung gestellt werden. Durch Wahl des Steuerwertes wird die gewünschte Farb-Helligkeitskombination ausgewählt.

Gemäß der Erfindung ist unter Verwendung einer einkanaligen Ansteuerung, welche z.B. für eine einfarbige, insbesondere weiße, Leuchte gedacht ist, eine mindestens zweifarbige Leuchte ansteuerbar, so dass - zumindest in gewissen Grenzen - deren Farbe und Helligkeit steuerbar ist.

Vorteilhaft ist, dass trotz der weitreichenden Möglichkeiten von Farb- und Helligkeitsgestaltung die Beleuchtungsanordnung an jede Licht-Steuer-Infrastruktur anschließbar ist, welche an jeweiligen Anschlussorten für Beleuchtungsanordnungen lediglich eine einzige Steuervariable zur Verfügung stellt.

Gemäß einer bevorzugten Ausführungsform der Erfindung enthält die Abbildungsvorschrift eine Steuerkurve. Gemäß der Steuerkurve wird jedem Steuerwert ein Wertepaar aus Helligkeitswert und Farbwert zugeordnet.

Die Steuereinheit ist dann dazu ausgebildet, dem Steuerwert einen Helligkeitswert und einen Farbwert zumindest unter Verwendung der Steuerkurve bzw. anhand der Steuerkurve zuzuordnen. Die Steuerkurve kann beispielsweise in Form einer Tabelle oder Datei, insbesondere in der Beleuchtungsanordnung, hinterlegt sein. Zumindest ein Teil der Abbildungsvorschrift besteht damit darin, einem jeweiligen Steuerwert einen Helligkeitswert und einen Farbwert anhand der Steuerkurve als jeweiliges Wertepaar zuzuordnen. Die Kurvenzuordnung ist hierbei völlig frei, das heißt zwei verschiedenen Steuerwerten können jeweils beliebige verschiedene oder gleiche Helligkeits- und Farbwerte zugeordnet sein. Dank der Steuerkurve besteht eine Grundzuordnung der jeweiligen Steuerwerte zu bestimmten Wertepaaren von Helligkeits- und Farbwerten.

In einer bevorzugten Variante dieser Ausführungsform enthält die Steuerkurve mindestens einen ersten Abschnitt bzw. Bereich von Steuerwerten, in welchem allen im Abschnitt liegenden Steuerwerten jeweils der gleiche Farbwert, jedoch unterschiedliche Helligkeitswerte zugeordnet sind. Das heißt, im Abschnitt findet bei gleichem bzw. konstantem Farbwert eine vom Steuerwert abhängige Zuordnung von Helligkeitswerten zu den Steuerwerten statt. Durch die Variation des Steuerwertes in einem solchen ersten Abschnitt kann Licht konstanter Farbe gedimmt werden.

Zusätzlich oder alternativ enthält die Steuerkurve einen zweiten Abschnitt bzw. Bereich von Steuerwerten, in welchem allen im Abschnitt liegenden Steuerwerten jeweils der gleiche Helligkeitswert, jedoch unterschiedliche Farbwerte zugeordnet sind. Das heißt, im Abschnitt findet bei gleichem bzw. konstantem Helligkeitswert eine vom Steuerwert abhängige Zuordnung von Farbwerten zu den Steuerwerten statt. Durch die Variation des Steuerwertes in einem solchen zweiten Abschnitt kann Licht konstanter Helligkeit farblich verändert werden.

In einer bevorzugten Ausführungsform der Erfindung enthält die Steuereinheit eine Dekodiereinheit. Diese ist dazu ausgebildet, aus einer am Steuereingang eintreffenden Folge von Steuerwerten einen Steuerbefehl zu dekodieren. Die Folge von Steuerwerten weist dabei ein Kodiermuster des Steuerbefehls auf. Die Steuereinheit ist dazu ausgebildet, an der Ausgangsschnittstelle Farb- und Helligkeitswerte auszugeben. Die Farb- und Helligkeitswerte erzeugt sie dabei gemäß einer dem Steuerbefehl zugeordneten Ablaufvorschrift. Die Ablaufvorschrift kann hierbei insbesondere die Abbildungsvorschrift, insbesondere die Steuerkurve nutzen bzw. beinhalten. Die Ablaufvorschrift bestimmt dabei auch die zeitliche Abfolge der auszugebenden Wertepaare von Farb- und Helligkeitswert. Diese zeitliche Abfolge kann entweder abhängig von der zeitlichen Abfolge der am Steuereingang eintreffenden Steuerwerte sein oder von deren zeitlicher Abfolge unabhängig sein.

Gemäß dieser Ausführungsform ergibt sich der Vorteil, dass unabhängig von bzw. zusätzlich zur Abbildungsvorschrift weitere Gestaltungsmöglichkeiten der Farb-Helligkeitswahl eröffnet sind. Beispielsweise können so durch einen Steuerbefehl Helligkeits- und/oder Farbübergänge in Form der Ablaufvorschrift ausgelöst werden, die über die Möglichkeiten der Abbildungsvorschrift hinausgehen. Derartige Ablaufvorschriften sind z.B. Programme bzw. Zeitverläufe von Helligkeit und Farbe, die im Beleuchtungssystem gespeichert sind. Je nach Komplexität des Kodiermusters können prinzipiell beliebig viele Steuerbefehle definiert werden und daher auch beliebig viele Ablaufvorschriften im Beleuchtungssystem hinterlegt werden.

In einer bevorzugten Variante dieser Ausführungsform ist das Kodiermuster derart beschaffen, dass dieses eine bestimmte zeitliche Folge bzw. Abfolge von Steuerwerten beschreibt. Der Steuerbefehl wird also derart kodiert, dass Steuerwerte in einer vorgegebenen zeitlichen Abfolge an die Beleuchtungseinrichtung übermittelt werden. Die eigentlichen Werte der Steuerwerte sind hierbei nicht von Belang.

Bei alternativen oder zusätzlichen Varianten kann das Kodiermuster auch derart beschaffen sein, dass es eine Folge von bestimmten Steuerwerten beschreibt. Der Steuerbefehl wird also derart kodiert, dass bestimmte Steuerwerte, d.h. solche mit bestimmter Größe, einander folgend an die Beleuchtungseinrichtung übermittelt werden. Die zeitliche Abfolge der Werte ist hierbei nicht von Belang.

Beide Varianten können auch kombiniert werden. Der Steuerbefehl ist dann dadurch kodiert, dass bestimmte Steuerwerte in einer bestimmten zeitlichen Abfolge am Steuereingang eintreffen.

Gemäß einer weiteren bevorzugten Ausführungsform sind die Steuerwerte diskrete Werte, wobei die diskreten Werte eine erste Werteauflösung aufweisen. Alternativ oder zusätzlich treffen die Steuerwerte mit einer maximalen ersten zeitlichen Auflösung am Steuereingang ein. Die Steuereinheit enthält einen Interpolator. Dieser ist dazu ausgebildet, den am Steuereingang eintreffenden Steuerwerten Helligkeitswerte und/oder Farbwerte zuzuordnen, wobei die Helligkeits- und/oder Farbwerte eine feinere zweite zeitliche Auflösung und/oder eine feinere zweite Werteauflösung aufweisen.

Durch eine interne feinere zweite zeitliche Auflösung und/oder eine feinere zweite Werteauflösung stehen seitens der Mehrfarbleuchte feinere Abstufungen und eine feinere zeitliche Taktung für Helligkeits- und Farbwerte zur Verfügung. So kann die Mehrfarbleuchte beispielsweise flimmerfrei betrieben werden, wenn sich ändernde Werte an diese mit einer Mindestfrequenz übermittelt werden, die vom menschlichen Auge nicht mehr auflösbar ist. Derartige Frequenzen sind z.B. mindestens 50, 60, 85, 100 oder 200 Hz. Auch können Helligkeiten und Farbänderungen derart fein abgestuft werden, dass Unterschiede zwischen zwei verschiedenen Helligkeits- oder Farbwerten vom menschlichen Auge nicht mehr wahrnehmbar sind. Beispielsweise werden zwischen zwei Farbwerten die Farbörter in einem Farbraum, z.B. CIE 1931, nur um höchstens ein oder zwei SDCM (standard deviations of colour matching) verändert. Insbesondere wird beispielsweise eine 7-Bit-Steuervariable mit 128 Steuerwerten auf eine 16-Bit-Helligkeitsvariable und 16-Bit-Farbvariable mit jeweils 65536 Helligkeits- und Farbwerten intern interpoliert.

In einer weiteren bevorzugten Ausführungsform ist die Beleuchtungsanordnung eine Beleuchtungsanordnung für einen Innenraum eines Fahrzeugs. Der Innenraum ist insbesondere eine Passagierkabine, das Fahrzeug ist insbesondere ein Luftfahrzeug. In derartigen Umgebungen ist die Erfindung besonders nützlich, da vorhandene einkanalige Licht-Steuer-Infrastrukturen für Mehrfarbleuchten genutzt werden können. Insbesondere bei einer Umrüstung von Leuchten für einfarbiges Licht auf Mehrfarbleuchten muss so die Infrastruktur nicht ausgetauscht werden, dennoch können bei Mehrfarbleuchten Farbe und Helligkeit - in gewissen Grenzen - frei gewählt werden.

Die Aufgabe der Erfindung wird auch gelöst durch ein Fahrzeug gemäß Patentanspruch 8, welches insbesondere ein Luftfahrzeug ist. Das Fahrzeug enthält eine erfindungsgemäße Beleuchtungseinrichtung. Für das Fahrzeug ergeben sich damit sinngemäß die in Verbindung mit der Beleuchtungseinrichtung genannten Vorteile.

In einer bevorzugten Ausführungsform weist das Fahrzeug eine Licht-Steuer-Infrastruktur auf, die der Ansteuerung einer Leuchte einer Fahrzeugbeleuchtung, insbesondere einer Innenraumbeleuchtung, dient. Die Licht-Steuer-Infrastruktur enthält mindestens einen Steuerausgang, wobei an jedem der Steuerausgänge mindestens eine Leuchte anschließbar ist. Die Infrastruktur ist dazu ausgebildet, an einem jeweiligen Steuerausgang eine einzige Steuervariable auszugeben, wobei die Steuervariable mehrere Steuerwerte annehmen kann. Eine erfindungsgemäße Beleuchtungseinrichtung ist dann mit ihrem Steuereingang an einem der Steuerausgänge angeschlossen.

Somit ergibt sich der Vorteil, dass in einem Fahrzeug mit einer einkanaligen Infrastruktur Mehrfarbleuchten bei weitestgehend freier Wahl von Lichtfarbe und Lichthelligkeit betrieben werden können.

Hinsichtlich des Verfahrens wird die Aufgabe gelöst durch ein Verfahren zum Umrüsten eines Fahrzeuges, insbesondere eines Luftfahrzeuges, gemäß Patentanspruch 10. Das Fahrzeug weist eine Licht-Steuer-Infrastruktur auf, welche der Ansteuerung einer Leuchte einer Beleuchtung des Fahrzeugs, insbesondere einer Innenraumbeleuchtung des Fahrzeugs, dient. Die Infrastruktur enthält mindestens einen, insbesondere mehrere Steuerausgänge. An jedem der Steuerausgänge ist mindestens eine der Leuchten anschließbar. Die Infrastruktur gibt an einem jeweiligen Steuerausgang eine einzige Steuervariable aus. Die Steuervariable kann hierbei mehrere verschiedene Steuerwerte annehmen. Bei der Umrüstung des Fahrzeugs wird an mindestens einem der Steuerausgänge mindestens eine erfindungsgemäße Beleuchtungseinrichtung angeschlossen. Insbesondere wird an allen Steuerausgängen jeweils mindestens eine erfindungsgemäße Beleuchtungseinrichtung angeschlossen.

Durch die erfindungsgemäße Umrüstung ist es möglich, Mehrfarbleuchten in einem Fahrzeug nachzurüsten, welches nur eine einkanalige Infrastruktur zur Ansteuerung von Leuchten aufweist.

In einer bevorzugten Ausführungsform des Verfahrens ist an den Steuerausgängen vor der Umrüstung mindestens eine einfarbige Leuchten, also eine solche zur ausschließlichen Erzeugung einfarbigen Lichts, angeschlossen, wobei die Helligkeit des Lichts gemäß der Steuervariablen eingestellt wird. Bei der Umrüstung werden mindestens eine der einfarbigen Leuchten, vorzugsweise mehrere, vorzugsweise alle, durch die erfindungsgemäßen Beleuchtungseinrichtungen ersetzt.

In dieser Verfahrensvariante können Fahrzeuge mit bisheriger einfarbiger Beleuchtung mit einer Mehrfarbbeleuchtung nachgerüstet werden.

Zusammenfassend wird gemäß der Erfindung also ein Adaptermodul - insbesondere in Form der Steuereinheit - zwischen einen Steuereingang bzw. eine zur Leuchte führende Steuerleitung und die Leuchte geschaltet. Ein Steuerwert wird - z.B. über die Signalleitung - an die Beleuchtungsanordnung übermittelt. Im Adaptermodul werden dem empfangenen Steuerwert anhand der Abbildungsvorschrift ein Helligkeitswert und ein Farbwert zugeordnet. Helligkeitswert und Farbwert werden an die Mehrfarbleuchte übermittelt. Die Mehrfarbleuchte erzeugt Licht einer Farbe gemäß des Farbwertes und einer Helligkeit gemäß des Helligkeitswertes.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
Fig. 1 einen Ausschnitt aus einem Flugzeug mit einer erfindungsgemäßen Beleuchtungsanordnung für dessen Passagierkabine,
Fig. 2 die Steuerkurve aus Fig. 1 im Detail mit skizzierten Übergängen zwischen Steuerwerten,
Fig. 3 alternative Steuerkurven mit Abschnitten für Farbübergänge,
Fig. 4 eine alternative Steuerkurve mit Abschnitten für Farbübergänge und eine monochrome Steuerkurve,
Fig. 5 das Detail V aus Fig. 2.

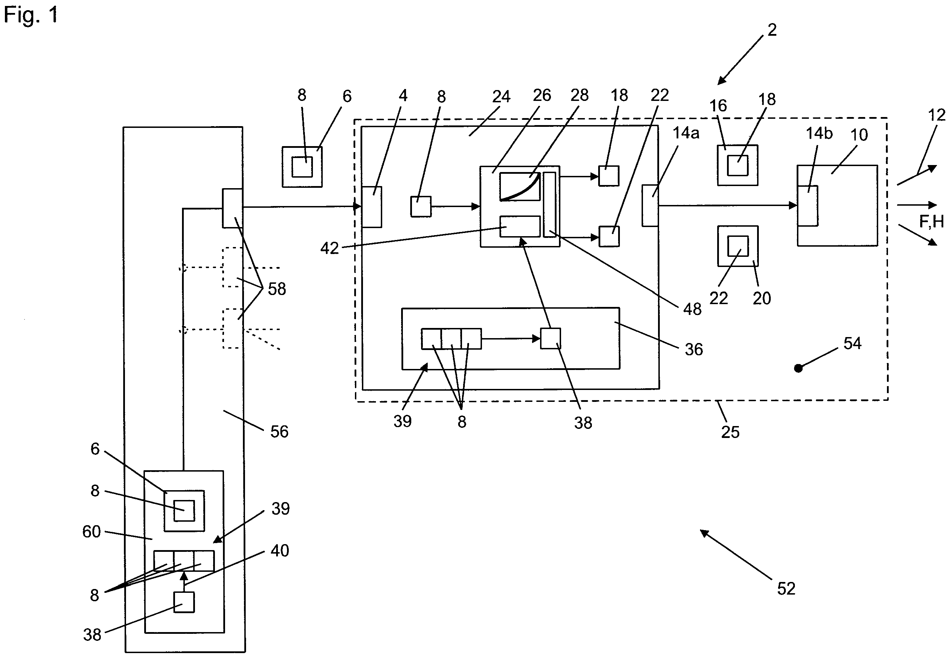

Fig. 1 zeigt eine Beleuchtungsanordnung 2, welche einen Steuereingang 4 aufweist. Am Steuereingang 4 empfängt die Beleuchtungsanordnung 2 eine Steuervariable 6, welche mehrere Steuerwerte 8 annehmen kann. Die Beleuchtungsanordnung 2 umfasst außerdem eine Leuchte 10. Die Leuchte 10 erzeugt Licht 12 in Abhängigkeit der Steuerwerte 8. Die Leuchte 10 ist eine Mehrfarbleuchte, im Beispiel eine Dreifach-LED-RGB-Leuchte (LED: Leuchtdiode, RGB: Rot-Grün-Blau). Diese weist eine Eingangsschnittstelle 14b auf. An der Eingangsschnittstelle 14b empfängt die Leuchte 10 eine Farbvariable 16, welche mehrere Farbwerte 18 annehmen kann. Außerdem empfängt sie eine Helligkeitsvariable 20, welche mehrere Helligkeitswerte 22 annehmen kann. Das erzeugte Licht 12 weist eine Farbe F gemäß des Farbwertes 18 und eine Helligkeit H gemäß des Helligkeitswertes 22 auf.

Die Beleuchtungsanordnung 2 weist außerdem eine Steuereinheit 24 auf, die den Steuereingang 4 sowie eine Ausgangsschnittstelle 14a enthält. Im Beispiel ist die Steuereinheit 24 ein Microcontroller. Die Ausgangsschnittstelle 14a ist mit der Eingangsschnittstelle 14b verbunden und dient zur Ausgabe der Farbvariablen 16 und der Helligkeitsvariablen 20 bzw. zu deren Übermittlung an die Leuchte 10. Die Steuereinheit 24 ist dazu ausgebildet, den am Steuereingang 4 empfangenen Steuerwert 8 auf den Helligkeitswert 22 und den Farbwert 18 abzubilden. Dies geschieht anhand einer Abbildungsvorschrift 26.

Im Betrieb empfängt die Beleuchtungsanordnung 2 also einen Steuerwert 8, die Steuereinheit 24 bildet den Steuerwert 8 gemäß einer Abbildungsvorschrift 26 auf einen Farbwert 18 und einen Helligkeitswert 22 ab. Diese Werte werden an die Leuchte 10 übermittelt, welche daraufhin Licht 12 aussendet. Das Licht 12 weist eine durch den Farbwert 18 charakterisierte Farbe F und eine durch den Helligkeitswert 22 charakterisierte Helligkeit H auf.

Die Steuereinheit 24 bildet also ein Adaptermodul für die Leuchte 10, welches separat also eigenes (Teil-)gerät der Leuchte 10 vorgeschaltet sein kann. Alternativ - wie in Fig. 1 gestrichelt angedeutet - ist das Adaptermodul in die Leuchte 10 integriert bzw. bildet mit dieser zusammen eine modifizierte Leuchte bzw. ein Leuchtenmodul 25.

Die Abbildungsvorschrift 26 enthält eine Steuerkurve 28. Die Steuerkurve 28 ordnet jedem möglichen Steuerwert 8 ein jeweiliges Wertepaar eines Helligkeitswertes 22 und eines Farbwertes 18 zu.

Fig. 1 zeigt die Beleuchtungsanordnung 2 als Teil eines Fahrzeugs 52, hier eines Luftfahrzeugs in Form eines Flugzeugs. Das Fahrzeug 52 weist einen Innenraum 54 auf, hier in Form einer Passagierkabine. Die Beleuchtungsanordnung 2 dient dazu, den Innenraum 54 mit Licht 12 zu beleuchten.

Um die Beleuchtungsanordnung 2 anzusteuern, enthält das Fahrzeug 52 eine Licht-Steuer-Infrastruktur 56. Die Licht-Steuer-Infrastruktur 56 enthält mehrere (in Fig. 1 gestrichelt angedeutet) Steuerausgänge 58, wobei an jedem dieser Steuerausgänge 58 eine oder mehrere Beleuchtungsanordnungen 2 mit ihrem jeweiligen Steuereingang 4 angeschlossen sind. An jedem der Steuerausgänge 58 stellt die Licht-Steuer-Infrastruktur 56 die Steuervariable 6 zur Verfügung, um diese in den jeweiligen Steuereingang 4 einzuspeisen. Die Licht-Steuer-Infrastruktur 56 enthält eine Bedieneinheit 60, gemäß welcher die Steuervariable 6 gewählt beziehungsweise verändert wird, um verschiedene Steuerwerte 8 anzunehmen. Die Wahl des Steuerwertes 8 geschieht beispielsweise händisch durch Fahrzeugpersonal oder durch ein nicht dargestelltes Beleuchtungsmodul bzw. dessen Programmablaufsteuerung.

In der Licht-Steuer-Infrastruktur 56 besteht die Möglichkeit, mit Hilfe der Steuervariablen 6 verschiedene Steuerbefehle 38 an die Steuereinheit 24 zu senden. Hierzu wird gemäß eines bestimmten, einem der Steuerbefehl 38 zugeordneten Kodiermusters 40 (in Fig. 1 angedeutet durch einen Pfeil) eine bestimmte Folge 39 von Steuerwerten 8 erzeugt. Das Kodiermuster 40 bestimmt hierbei die zeitliche Abfolge und/oder die Abfolge bestimmter Werte der Steuerwerte 8 in der Folge 39.

Die Steuereinheit 24 enthält zum Empfang der Steuerbefehle 38 eine Dekodiereinheit 36. Die Dekodiereinheit 36 überwacht die am Steuereingang 4 eintreffenden Steuerwerte 8 hinsichtlich ihrer zeitlichen Abfolge und bezüglich der Abfolge ihrer Größe bzw. Werte und überprüft diese auf das Auftreten einer der festgelegten Folgen 39. Erkennt die Dekodiereinheit eine der durch die definierten Steuerbefehle 38 kodierten Folgen 39 bzw. das Auftreten des zugehörigen Kodiermusters 40, dekodiert sie bzw. erkennt sie hieraus den Steuerbefehl 38.

Die Steuereinheit 24 enthält zu jedem der Steuerbefehle 38 eine Ablaufvorschrift 42. Die Ablaufvorschrift 42 ist dabei Teil der Abbildungsvorschrift 26 und erzeugt Farb- und Helligkeitswerte 18,22 abhängig vom Steuerbefehl 38. Die Abbildungsvorschrift 26 erzeugt dabei auch zeitliche Abfolgen von mehreren Wertepaaren von Farb- und Helligkeitswerten 18,22, die nicht zwangsweise abhängig vom am Steuereingang 4 aktuell anliegenden Steuerwert 8 sein müssen, und gibt diese zeitgesteuert an die Leuchte 10 weiter.

Die Steuereinheit 24 enthält außerdem einen Interpolator 48. Dieser dient dazu, zwischen dem Anlegen zweier aufeinanderfolgender Steuerwerte 8 am Steuereingang 4 für den Farbwert 18 und/oder den Helligkeitswert 22 Zwischenwerte in zeitlicher Hinsicht und/oder in Hinsicht auf deren Werte zu erzeugen bzw. zu interpolieren.

Fig. 1 zeigt ein umgerüstetes Fahrzeug 52. Vor der Umrüstung war das Fahrzeug mit Leuchten 10 zur Erzeugung einfarbigen Lichts ausgerüstet. Der Steuerwert 8 gab dabei alleine die Helligkeit H des erzeugten Lichts vor. Mit anderen Worten wurden die Leuchten anhand des Steuerwertes zwischen dem Zustand "Aus" und "100% Helligkeit" gedimmt. Der Steuerwert wurde dabei also als "Dimmwert" verwendet. Bei der Umrüstung wurden die bisherigen Leuchten 10 von den Steuerausgängen 58 entfernt und durch die erfindungsgemäßen Leuchten 10 zur Erzeugung von Licht verschiedener Farben F und verschiedener Helligkeiten H ersetzt.

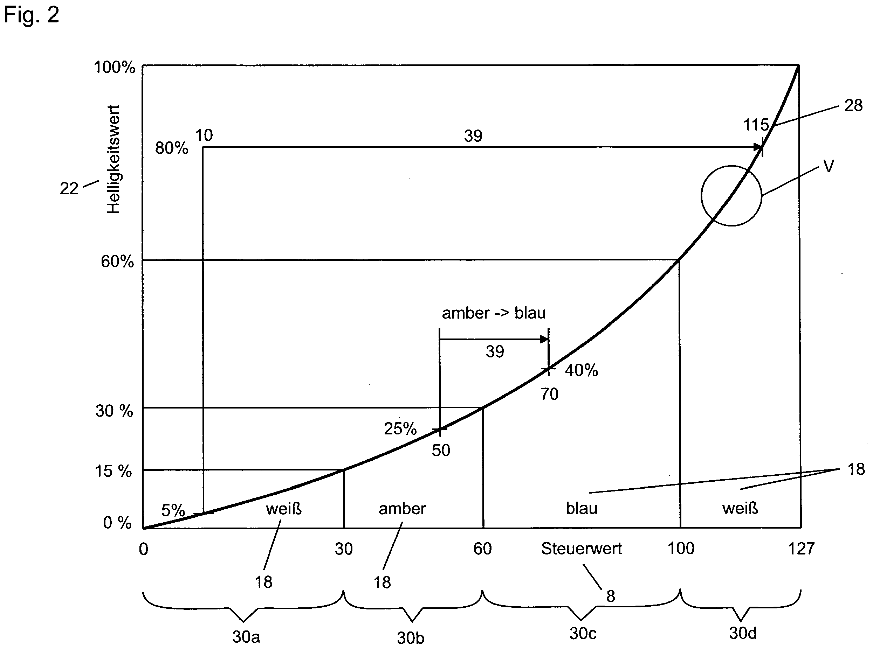

Fig. 2 zeigt die Steuerkurve 28 aus Fig. 1 im Detail. Auf der Abszisse ist der Steuerwert 8 aufgetragen, welcher im Beispiel ein 7-Bit-Digitalwert ist, der Werte von "0" bis "127" annehmen kann. Der Einfachheit halber ist die Steuerkurve 28 jedoch nicht in Form 128 diskreter Wertepunkte, sondern ausgezogen dargestellt. Auf der Ordinate ist der Helligkeitswert 22 aufgetragen, welcher im Beispiel Werte zwischen "0 %" und "100 %" annehmen kann. Bei "0 %" Helligkeitswert 22 erzeugt die Leuchte 10 kein Licht, bei "100 %" Helligkeitswert 22 erzeugt die Leuchte 10 Licht 12 mit der bei der aktuellen Farbe F maximal durch sie darstellbaren Helligkeit H. Der jeweilige Farbwert 18, der jedem möglichen Steuerwert 8 zugeordnet wird, ist in Fig. 2 durch Worte der Farben "Weiß", "Amber" und "Blau" dargestellt. Die Worte stehen stellvertretend für entsprechende Wertetripel RGB (Rot, Grün, Blau) zur Mischung des betreffenden Farbentons aus bestimmten Anteilen der Grundfarben Rot, Grün und Blau.

Die Steuerkurve 28 weist insgesamt vier erste Abschnitte 30a-d auf. In jedem der ersten Abschnitte 30a-d wird jedem darin liegenden Steuerwert 8 jeweils der gleiche Farbwert 18, jedoch vom Steuerwert 8 abhängige Helligkeitswerte 22 zugeordnet. So wird z.B. im ersten Abschnitt 30a allen Steuerwerten 8 "0" - "30" der gleiche Farbwert 18 "Weiß" zugeordnet. Dagegen wird jedem der Steuerwerte 8 "0" - "30" gemäß der Steuerkurve 28 ein unterschiedlicher Helligkeitswert 22 zwischen "0 %" und "15 %" zugeordnet. Den Steuerwerten 8 "31" - "60" im ersten Abschnitt 30b wird jeweils die Farbwert 18 "Amber" zugeordnet, aber verschiedene Helligkeitswerte 22 zwischen "15 %" und "30 %" gemäß der Steuerkurve 28.

Fig. 2 enthält auch zwei Beispiele für Steuerbefehle 38. Das Kodiermuster 40 eines ersten Steuerbefehls 38 besteht darin, eine Folge 39 von lückenlos aufeinanderfolgenden Steuerwerten 8 (in Fig. 2 die Werte "50" bis "70") in einer bestimmten zeitlichen Abfolge, nämlich mit "Dimmgeschwindigkeit" an den Steuereingang 4 anzulegen. Das heißt die angelegten Werte müssen einander innerhalb von Zeitabständen folgen, die eine Maximalgrenze nicht überschreiten dürfen. Z.B. muss der gesamte Dimmvorgang nach einer Maximalzeit abgeschlossen sein, z.B. 1,2,5 oder 10 Sekunden. Alternativ müssen zwei einzelne Steuerwerte 8 einander innerhalb einer Maximalzeit von z.B. 500, 250, 100 oder 10ms folgen.

Der Steuerbefehl 38 bedeutet hierbei, dass die Ablaufvorschrift 42 ausgehend vom zugeordneten Farbwert 18 des ersten Steuerwertes 8 "50" der Folge 39, hier "Amber", hin zum Farbwert 18 des letzten Steuerwertes 8 "70", hier "Blau" einen allmählichen beziehungsweise stufenlosen Farbverlauf erzeugt, wobei die Helligkeitswerte 22 ebenfalls vom anfänglichen Helligkeitswert 22 "25%" zum letzten Helligkeitswert 22 "40%" der Folge 39 gemäß der Steuerkurve 28 verändert werden.

Fig. 2 enthält ein weiteres Beispiel für einen Steuerbefehl 38: Das zugehörige Kodiermuster 40 besteht darin, den Steuerwert 8 sprunghaft von einem ersten Wert (hier "10") zu einem zweiten Wert (hier "115") hin verändert wird, wobei beiden Werten der gleiche Farbwert 18 (hier "Weiß") zugeordnet sein muss. "Sprunghaft" bedeutet, dass die Steuerwerte 8 ohne Zwischenwerte und innerhalb einer bestimmten Maximalzeit, beispielsweise innerhalb 1s, 500ms, 250ms oder 100ms am Steuereingang 4 angelegt werden. Dieser Steuerbefehl 38 dient dem Helligkeitsübergang bei konstantem Farbwert 18 (hier "Weiß"). Die Ablaufvorschrift 42 erzeugt eine im Vergleich zum Anlegen der beiden Steuerwerte 8 vergleichsweise langsame Folge von Helligkeitswerten 22, beispielsweise mit einer Gesamtdauer von 3, 5, 10, 15 oder 20 Sekunden, welche ausgehend vom ersten Helligkeitswert 22 (hier "5%") hin zum zweiten Helligkeitswert 22 (hier "80%") ansteigen, ohne den Farbwert 18 "Weiß" zu verändern. Mit anderen Worten werden beim entsprechenden Helligkeitsübergang die Farbwechsel auf "Amber" und "Blau" in der Steuerkurve 28 vermieden bzw. übergangen, und lediglich farbkonstantes, hier weißes, Licht heller gedimmt.

Ein weiteres nicht dargestelltes Beispiel für einen Steuerbefehl 38 wäre beispielsweise eine Folge bestimmter Werte von Steuerwerten 8 am Steuereingang 4 anzulegen, ohne dass es hierbei auf Zeitvorgaben ankäme. Zum Beispiel führt das Anlegen der Wertefolge 39 "0 - 64 - 127 - 64 - 0" zu einem Steuerbefehl 38 für einen "Demomodus". In diesem erzeugt die Ablaufvorschrift 42 für eine vorgegebene Zeit oder bis zum Absetzen eines weiteren Steuerbefehls 38 verschiedene Helligkeitswerte 22 jeweils vergleichsweise langsame bzw. sanfte komplette Spektraldurchläufe aller möglichen Farbwerte 18 der Leuchte 10, um die vollen Farbmöglichkeiten der Beleuchtungsanordnung 2 zu demonstrieren.

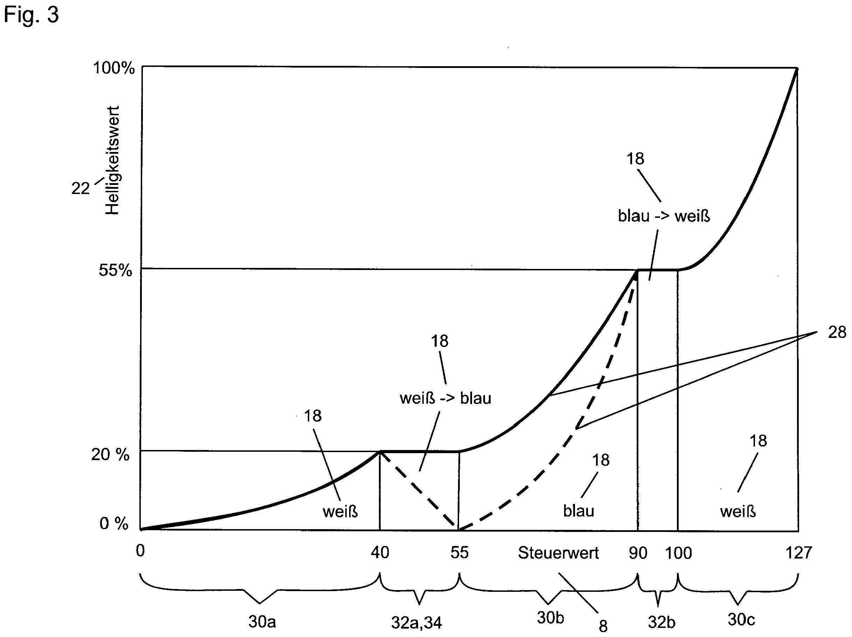

Fig. 3 zeigt eine alternative Steuerkurve 28 in ausgezogener Darstellung. Diese besitzt drei erste Abschnitte 30a-c entsprechend derjenigen in Fig. 2, in welchen also den Steuerwerten 8 jeweils konstante Farbwerte 18 "Weiß" oder "Blau" bei variablen Helligkeitswerten 22 zwischen "0% - 20%", "20% - 55%" und "55% - 100%" zugeordnet werden.

Die Steuerkurve 28 besitzt auch zwei zweite Abschnitte 32a, b. In diesen wird sämtlichen darin liegenden Steuerwerten 8 der jeweils gleiche Helligkeitswert 22, nämlich "20%" und "55%", zugeordnet, jedoch unterschiedliche Farbwerte 18. So werden im zweiten Abschnitt 32a den Steuerwerten 8 "41 - 55" jeweils unterschiedliche Farbwerte 18 zugeordnet, welche sich allmählich von "Weiß" nach "Blau" ändern. Die entsprechenden Farbwerte sind solche, welche in einem nicht dargestellten Farbraum CIE-1931 auf einer Verbindungsgeraden zwischen den Farbörtern "Weiß" und "Blau" liegen. Entsprechendes gilt für den zweiten Abschnitt 32b, in welchem sämtlichen Steuerwerten 8 "91 - 100" Farbwerte 18 zugeordnet werden, die allmählich vom Farbwert 18 "Blau" zum Farbwert 18 "Weiß" verlaufen.

Fig. 3 zeigt gestrichelt eine weitere alternative Steuerkurve 28. Diese weist als Besonderheit einen dritten Abschnitt 34 auf, in welchem sich für Steuerwerte 8 "41 - 45" identisch zum zweiten Abschnitt 32a die Farbwerte 18 allmählich von "Weiß" nach "Blau" ändern, jedoch auch die Helligkeitswerte 22 von "20 % auf "0 %" gemäß der Steuerkurve 28 abnehmen.

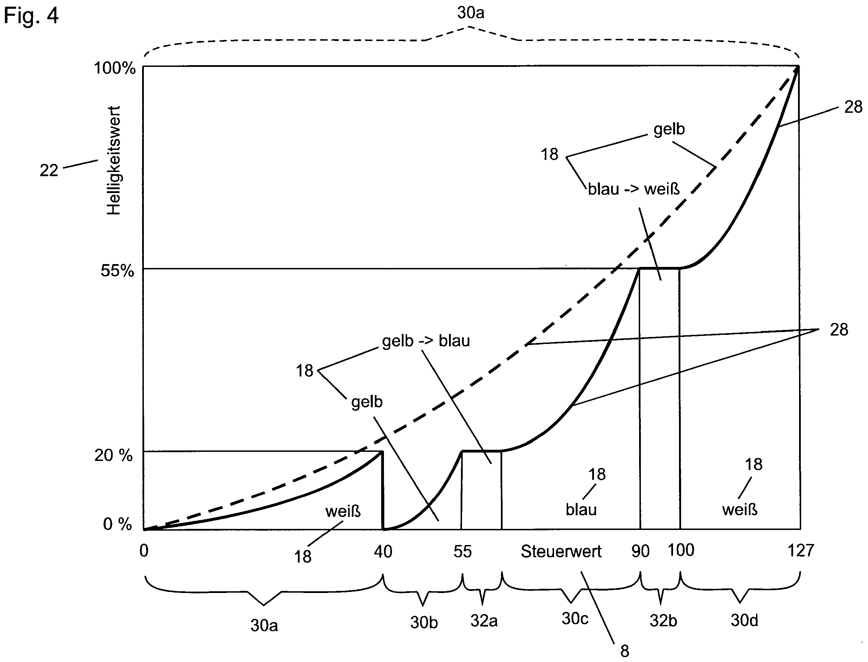

Fig. 4 zeigt ausgezogen eine weitere alternative Steuerkurve 28. Diese weist entsprechend Fig. 2 bzw. Fig. 3 wieder vier erste Abschnitte 30a-d mit den jeweils konstanten Farbwerten 18 "Weiß", "Gelb" und "Blau" bei jeweils veränderlichen Helligkeitswerten 22 auf. In zwei zweiten Abschnitten 32a, b werden gemäß Fig. 3 wieder den Steuerwerten 8 veränderliche Farbwerte 18 (von "gelb" nach "blau" und von "blau" nach "weiß") bei konstanten Helligkeitswerten 22 zugewiesen.

Gestrichelt ist eine weitere alternative Steuerkurve 28 dargestellt, welche einen einzigen Abschnitt 30a aufweist, in dem allen möglichen Steuerwerten 8 von "0" bis "127" der gleiche Farbwert 18 "Gelb" zugeordnet wird bei variablen Helligkeitswerten 22 von "0 %" bis "100 %".

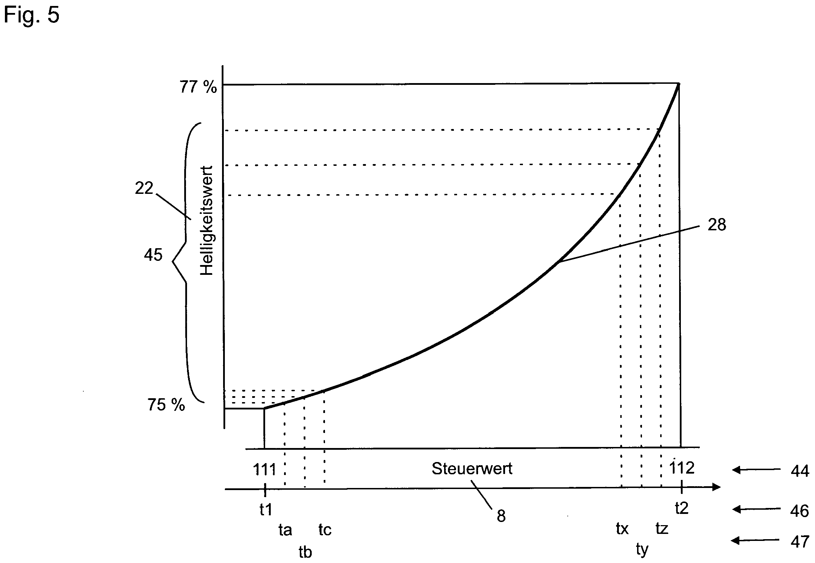

Fig. 5 zeigt das Detail V aus Fig. 2, um eine weitere Eigenschaft der Beleuchtungsanordnung 2 zu illustrieren. Die Steuerwerte 8 besitzen eine erste Werteauflösung 44, da sie nur 128 Werte annehmen können. Aufgrund der begrenzten Anzahl von nur 128 Steuerwerten 8 ist eine Veränderung des Helligkeitswertes 22 von "75%" auf "77%" zwischen den beiden Steuerwerten 8 "111" und "112" als Änderung der Helligkeit H im Licht 12 durch einen nicht dargestellten Betrachter deutlich wahrnehmbar. Mit anderen Worten reicht die Auflösung für Helligkeitswerte 22 nicht aus, um von einem Betrachter nicht wahrnehmbare Helligkeitsübergänge zu verwirklichen. Gleiches gilt in nicht dargestellter Weise auch für Farbübergänge.

Auch besteht seitens der Übermittlung der Steuerwerte 8 an den Steuereingang 4 eine zeitliche Beschränkung. Die Steuerwerte 8 können seitens der Licht-Steuer-Infrastruktur 56 nur mit einem kleinsten Zeitabstand von z.B. 20ms zwischen Zeitpunkten t2 - t1 an den Steuereingang 4 übermittelt werden. Hier besteht also eine erste zeitliche Auflösung 46.

Der Interpolator 48 erzeugt daher in zeitlicher Hinsicht Zwischenwerte für den Farbwert zu den Zeitpunkten ta bis tz mit t1 < ta < ... < tz < t2 mit einer erhöhten zweiten zeitlichen Auflösung 47. Zu jedem dieser Zeitpunkte ta bis tz interpoliert der Interpolator 48 entlang der Steuerkurve 28 Zwischenwerte des Steuerwertes 8 und ordnet diesen Zwischenwerte anhand der Steuerkurve 28 Helligkeitswerte 22 zu (gestrichelte Linien in Fig. 5). So entsteht eine feinere zweite Werteauflösung 45 für die ausgegebenen Helligkeitswerte 22, die in der feineren zweiten zeitlichen Auflösung 47 an der Ausgangsschnittstelle 14a ausgegeben werden, um die Leuchte 10 mit einem "sanften" Helligkeitsübergang anzusteuern, der vom Betrachter als stufenlos wahrgenommen wird.

### Bezugszeichenliste

- 2: Beleuchtungsanordnung
- 4: Steuereingang
- 6: Steuervariable
- 8: Steuerwert
- 10: Leuchte
- 12: Licht
- 14a: Ausgangsschnittstelle
- 14b: Eingangsschnittstelle
- 16: Farbvariable
- 18: Farbwert
- 20: Helligkeitsvariable
- 22: Helligkeitswert
- 24: Steuereinheit
- 25: Leuchtenmodul
- 26: Abbildungsvorschrift
- 28: Steuerkurve
- 30a-d: erster Abschnitt
- 32a,b: zweiter Abschnitt
- 34: dritter Abschnitt
- 36: Dekodiereinheit
- 38: Steuerbefehl
- 39: Folge
- 40: Kodiermuster
- 42: Ablaufvorschrift
- 44: erste Werteauflösung
- 45: zweite Werteauflösung
- 46: erste zeitliche Auflösung
- 47: zweite zeitliche Auflösung
- 48: Interpolator
- 52: Fahrzeug
- 54: Innenraum
- 56: Licht-Steuer-Infrastruktur
- 58: Steuerausgang
- 60: Bedieneinheit
- F: Farbe
- H: Helligkeit
- t: Zeitpunkt

## Patentansprüche

1. Beleuchtungsanordnung (2) für einen Innenraum (54) eines Fahrzeugs (52) mit einer Licht-Steuer Infrastruktur (56) mit mehreren Steuerausgängen (58) zum jeweiligen Anschluss einer oder mehrerer Beleuchtungsanordnungen (2) und mit einer Bedieneinheit (60) zum Wählen bzw. Verändern einer Steuervariablen (6), wobei an jedem der Steuerausgänge (58) die Steuervariable (6) zur Verfügung stellbar ist,
- mit einem Steuereingang (4) für die einzige Steuervariable (6), die mehrere Steuerwerte (8) annehmen kann, wobei der Steuereingang (4) an einen der Steuerausgänge (58) anschließbar ist,
- und mit einer Leuchte (10) zur Erzeugung von Licht (12) in Abhängigkeit der Steuerwerte (8),
**dadurch gekennzeichnet, dass**
- die Leuchte (10) eine Mehrfarbleuchte mit einer Eingangsschnittstelle (14b) zur Einspeisung einer Farbvariablen (16), die mehrere Farbwerte (18) annehmen kann, und einer Helligkeitsvariablen (20), die mehrere Helligkeitswerte (22) annehmen kann, ist,
- die Beleuchtungsanordnung (2) eine Steuereinheit (24) enthält, die den Steuereingang (4) und eine Ausgangsschnittstelle (14a) für die Farbvariable(16) und die Helligkeitsvariable (20) aufweist, die mit der Eingangsschnittstelle (14b) verbunden ist,
- die Steuereinheit (24) dazu ausgebildet ist, einem am Steuereingang (4) empfangenen Steuerwert (8) anhand einer Abbildungsvorschrift (26) einen Helligkeitswert (22) und einen Farbwert (18) zuzuordnen und an der Ausgangs-Schnittstelle (14a) auszugeben,
- die Steuereinheit (24) ein eigenes, separates oder in die Leuchte (10) integriertes Adaptermodul für die Mehrfarbleuchte bildet, so dass das Adaptermodul zusammen mit der Leuchte (10) eine modifizierte Leuchte (10) bzw. ein Leuchtenmodul (25) bildet.

2. Beleuchtungsanordnung (2) nach Anspruch 1,
**dadurch gekennzeichnet, dass**
die Abbildungsvorschrift (26) eine Steuerkurve (28) enthält, gemäß der jedem Steuerwert (8) ein Wertepaar aus Helligkeitswert (22) und Farbwert (18) zugeordnet ist.

3. Beleuchtungsanordnung (2) nach Anspruch 2,
**dadurch gekennzeichnet, dass**
die Steuerkurve (28) mindestens einen ersten Abschnitt (30a-d) von Steuerwerten (8) enthält, in dem allen Steuerwerten (8) der gleiche Farbwert (18) zugeordnet ist und jedem Steuerwert (8) ein von diesem abhängiger Helligkeitswert (22) zugeordnet ist, und/oder
die Steuerkurve (28) mindestens einen zweiten Abschnitt (32a-b) von Steuerwerten (8) enthält, in dem allen Steuerwerten (8) der gleiche Helligkeitswert (22) zugeordnet ist und jedem Steuerwert (8) ein von diesem abhängiger Farbwert (18) zugeordnet ist.

4. Beleuchtungsanordnung (2) nach einem der vorhergehenden Ansprüche,
**dadurch gekennzeichnet, dass**
- die Steuereinheit (24) eine Dekodiereinheit (36) enthält, die dazu ausgebildet ist, aus einer am Steuereingang (4) eintreffenden Folge (39) von Steuerwerten (8), die ein Kodiermuster (40) eines Steuerbefehls (38) aufweist, den Steuerbefehl (38) zu dekodieren,
- die Steuereinheit (24) dazu ausgebildet ist, Farbwerte (18) und Helligkeitswerte (22) gemäß einer dem Steuerbefehl (38) zugeordneten Ablaufvorschrift (42) zu erzeugen und an der Ausgangsschnittstelle (14a) auszugeben.

5. Beleuchtungsanordnung (2) nach Anspruch 4,
**dadurch gekennzeichnet, dass**
- das Kodiermuster (40) derart beschaffen ist, dass dieses eine bestimmte zeitliche Folge (39) von Steuerwerten (8) beschreibt,
und/oder
- das Kodiermuster (40) derart beschaffen ist, dass es eine Folge (39) von bestimmten Steuerwerten (8) beschreibt.

6. Beleuchtungsanordnung (2) nach einem der vorhergehenden Ansprüche, **dadurch gekennzeichnet, dass**
- die Steuerwerte (8) diskrete Werte einer ersten Werteauflösung (44) sind, und/oder die Steuerwerte (8) am Steuereingang (4) mit einer maximalen ersten zeitlichen Auflösung (46) anlegbar sind,
- die Steuereinheit (24) einen Interpolator (48) enthält, der dazu ausgebildet ist, den am Steuereingang (4) empfangenen Steuerwerten (8) Helligkeitswerte (22) und/oder Farbwerte (18) einer feineren zweiten zeitlichen Auflösung (47) und/oder einer feineren zweiten Werteauflösung (45) zuzuordnen.

7. Beleuchtungsanordnung (2) nach einem der vorhergehenden Ansprüche,
**dadurch gekennzeichnet, dass**
die Beleuchtungsanordnung (2) eine Beleuchtungsanordnung (2) für einen Innenraum (54) in Form einer Passagierkabine und/oder eine Beleuchtungsanordnung für ein Fahrzeug (52) in Form eines Luftfahrzeugs ist.

8. Fahrzeug (52), insbesondere Luftfahrzeug
**dadurch gekennzeichnet, dass**
es eine Beleuchtungsanordnung (2) gemäß einem der Ansprüche 1 bis 7 enthält.

9. Fahrzeug (52) nach Anspruch 8,
das eine der Ansteuerung einer Leuchte (10) einer Fahrzeugbeleuchtung, insbesondere einer Innenraumbeleuchtung, dienende Licht-Steuer-Infrastruktur (56) aufweist, die mindestens einen Steuerausgang (58) enthält, an dem mindestens eine Leuchte (10) anschließbar ist, wobei die Licht-Steuer-Infrastruktur (56) dazu ausgebildet ist, an einem jeweiligen Steuerausgang (58) eine einzige Steuervariable (6), die mehrere Steuerwerte (8) annehmen kann, auszugeben,
**dadurch gekennzeichnet, dass**
- die Beleuchtungsanordnung (2) mit ihrem Steuereingang (4) an einem der Steuerausgänge (58) angeschlossen ist.

10. Verfahren zum Umrüsten eines Fahrzeugs (52), insbesondere eines Luftfahrzeugs, das eine der Ansteuerung einer Leuchte (10) einer Fahrzeugbeleuchtung, insbesondere einer Innenraumbeleuchtung, dienende Licht-Steuer-Infrastruktur (56) aufweist, die mindestens einen Steuerausgang (58) enthält, an dem mindestens eine der Leuchten (10) anschließbar ist, wobei die Licht-Steuer-Infrastruktur (56) an einem jeweiligen Steuerausgang (58) eine einzige Steuervariable (6), die mehrere Steuerwerte (8) annehmen kann, ausgibt,
**dadurch gekennzeichnet, dass**
- bei der Umrüstung an mindestens einem der Steuerausgänge (58) mindestens eine Beleuchtungsanordnung (2) gemäß einem der Ansprüche 1 bis 7 mit ihrem Steuereingang (4) angeschlossen wird.

11. Verfahren nach Anspruch 10,
wobei vor der Umrüstung an den Steuerausgängen (58) Leuchten (10) zur ausschließlichen Erzeugung einfarbigen Lichts (12) angeschlossen sind, deren Helligkeit (H) gemäß der Steuervariable (6) eingestellt wird,
**dadurch gekennzeichnet, dass**
bei der Umrüstung mindestens eine der Leuchten (10) durch die Beleuchtungsanordnung (2) ersetzt wird.

## Claims

1. Lighting arrangement (2) for an interior (54) of a vehicle (52) having a light control infrastructure (56) having multiple control outputs (58) for respectively connecting one or more lighting arrangements (2) and having an operator control unit (60) for selecting and altering a control variable (6), the control variable (6) being able to be made available at each of the control outputs (58),
- having a control input (4) for a single control variable (6) that can assume multiple control values (8), the control input (4) being connectable to one of the control outputs (58),
- and having a luminaire (10) for producing light (12) on the basis of the control values (8),
**characterized in that**
- the luminaire (10) is a multicoloured luminaire having an input interface (14b) for supplying a colour variable (16), which can assume multiple colour values (18), and a brightness variable (20), which can assume multiple brightness values (22),
- the lighting arrangement (2) contains a control unit (24) that has the control input (4) and an output interface (14a) for the colour variable (16) and the brightness variable (20) that is connected to the input interface (14b),
- the control unit (24) is designed to assign a brightness value (22) and a colour value (18) to a control value (8) received at the control input (4) using a mapping rule (26) and to output them on the output interface (14a),
- the control unit (24) forms an adapter module of its own, a separate adapter module or an adapter module integrated into the luminaire (10) for the multicoloured luminaire, so that the adapter module together with the luminaire (10) forms a modified luminaire (10) or a luminaire module (25).

2. Lighting arrangement (2) according to Claim 1,
**characterized in that**
the mapping rule (26) contains a control curve (28) according to which each control value (8) has an associated pair of values comprising brightness value (22) and colour value (18).

3. Lighting arrangement (2) according to Claim 2,
**characterized in that**
the control curve (28) contains at least one first section (30a-d) of control values (8), in which section all control values (8) have the same associated colour value (18) and each control value (8) has an associated brightness value (22) that is dependent thereon,
and/or the control curve (8) contains at least one second section (30a-d) of control values (8), in which section all control values (8) have the same associated brightness value (22) and each control value (8) has an associated colour value (18) that is dependent thereon.

4. Lighting arrangement (2) according to one of the preceding claims,
**characterized in that**
- the control unit (24) contains a decoding unit (36) that is designed to decode the control command (38) from a series (39) of control values (8) that arrives at the control input (4) and that has a coding pattern (40) for a control command (38),
- the control unit (24) is designed to produce colour values (18) and brightness values (22) according to an algorithm (42) associated with the control command (38) and to output them on the output interface (14a).

5. Lighting arrangement (2) according to Claim 4, **characterized in that**
- the coding pattern (40) is of a nature such that it describes a determined chronological order (39) for control values (8),
and/or
- the coding pattern (40) is of a nature such that it describes a series (39) of determined control values (8).

6. Lighting arrangement (2) according to one of the preceding claims,
**characterized in that**
- the control values (8) are discrete values having a first value resolution (44), and/or the control values (8) can be applied to the control input (4) at a maximum first temporal resolution (46),
- the control unit (24) contains an interpolator (48) that is designed to assign brightness values (22) and/or colour values (18) having a finer second temporal resolution (47) and/or having a finer second value resolution (45) to the control values (8) received at the control input (4).

7. Lighting arrangement (2) according to one of the preceding claims,
**characterized in that**
the lighting arrangement (2) is a lighting arrangement (2) for an interior (54) in the form of a passenger cabin and/or a lighting arrangement for a vehicle (52) in the form of an aircraft.

8. Vehicle (52), particularly aircraft,
**characterized in that**
it contains a lighting arrangement (2) according to one of Claims 1 to 7.

9. Vehicle (52) according to Claim 8,
which has a light control infrastructure (56) that is used to actuate a luminaire (10) of a vehicle lighting system, particularly of an interior lighting system, and that contains at least one control output (58) to which at least one luminaire (10) can be connected, wherein the light control infrastructure (56) is designed to output a single control variable (6), which can assume multiple control values (8), at a respective control output (58),
**characterized in that**
- the lighting arrangement (2) has its control input (4) connected to one of the control outputs (58) .

10. Method for converting a vehicle (52), particularly an aircraft, that has a light control infrastructure (56) that is used to actuate a luminaire (10) of a vehicle lighting system, particularly of an interior lighting system, and that contains at least one control output (58) to which at least one of the luminaires (10) can be connected, wherein the light control infrastructure (56) outputs a single control variable (6), which can assume multiple control values (8), at a respective control output (58),
**characterized in that**
- the conversion involves at least one lighting arrangement (2) according to one of Claims 1 to 7 having its control input (4) connected to at least one of the control outputs (58).

11. Method according to Claim 10,
wherein the conversion is preceded by luminaires (10) for exclusively producing monochromatic light (12), whose brightness (H) is adjusted according to the control variable (6), being connected to the control output (58),
**characterized in that**
the conversion involves at least one of the luminaires (10) being replaced by the lighting arrangement (2).

## Revendications

1. Arrangement d'éclairage (2) pour un espace intérieur (54) d'un véhicule (52), comprenant une infrastructure de commande de lumière (56) comprenant plusieurs sorties de commande (58) servant respectivement au raccordement d'un ou plusieurs arrangements d'éclairage (2) et comprenant une unité d'opération (60) servant à sélectionner ou à modifier une variable de commande (6), la variable de commande (6) pouvant être mise à disposition au niveau de chacune des sorties de commande (58),
- comprenant une entrée de commande (4) pour l'unité variable de commande (6), laquelle peut adopter plusieurs valeurs de commande (8), l'entrée de commande (4) pouvant être raccordée à l'une des sorties de commande (58),
- et comprenant une lampe (10) servant à produire de la lumière (12) en fonction des valeurs de commande (8), **caractérisé en ce que** la lampe (10) est une lampe multicolore comprenant une interface d'entrée (14) servant à l'injection d'une variable chromatique (16) qui peut adopter plusieurs valeurs chromatiques (18), et d'une variable de luminosité (20) qui peut adopter plusieurs valeurs de luminosité (22),
- l'arrangement d'éclairage (2) contient une unité de commande (24), laquelle possède l'entrée de commande (4) et une interface de sortie (14a) pour la variable chromatique (16) et la variable de luminosité (20), laquelle est reliée à l'interface d'entrée (14),
- l'unité de commande (24) est configurée pour associer une valeur de luminosité (22) et une valeur chromatique (18) à une valeur de commande (8) reçue au niveau de l'entrée de commande (4) à l'aide d'une consigne de représentation (26) et les délivrer au niveau de l'interface de sortie (14a),
- l'unité de commande (24) forme un module adaptateur propre, séparé ou intégré dans la lampe (10) pour la lampe multicolore, de sorte que le module adaptateur, conjointement avec la lampe (10), forme une lampe (10) modifiée ou un module éclairant (25).

2. Arrangement d'éclairage (2) selon la revendication 1, **caractérisé en ce que** la consigne de représentation (26) contient une courbe de commande (28) conformément à laquelle une paire de valeurs composée d'une valeur de luminosité (22) et d'une valeur chromatique (18) est associée à chaque valeur de commande (8) .

3. Arrangement d'éclairage (2) selon la revendication 2, **caractérisé en ce que** la courbe de commande (28) contient au moins une première portion (30a-d) de valeurs de commande (8) dans laquelle la même valeur chromatique (18) est associée à toutes les valeurs de commande (8) et une valeur de luminosité (22) dépendante de celle-ci est associée à chaque valeur de commande (8)
et/ou
la courbe de commande (28) contient au moins une deuxième portion (32a-d) de valeurs de commande (8) dans laquelle la même valeur de luminosité (22) est associée à toutes les valeurs de commande (8) et une valeur chromatique (18) dépendante de celle-ci est associée à chaque valeur de commande (8).

4. Arrangement d'éclairage (2) selon l'une des revendications précédentes, **caractérisé en ce que**
- l'unité de commande (24) contient une unité de décodage (36) qui est configurée pour, à partir d'une séquence (39) de valeurs de commande (8) arrivant au niveau de l'entrée de commande (4) qui possède un modèle de codage (40) d'une instruction de commande (38), décoder l'instruction de commande (38),
- l'unité de commande (24) est configurée pour générer les valeurs chromatiques (18) et les valeurs de luminosité (22) conformément à une consigne de déroulement (42) associée à l'instruction de commande (38) et les délivrer au niveau de l'interface de sortie (14a) .

5. Arrangement d'éclairage (2) selon la revendication 4, **caractérisé en ce que**
- le modèle de codage (40) est acquis de telle sorte que celui-ci décrit une séquence chronologique (39) donnée de valeurs de commande (8),
et/ou
- le modèle de codage (40) est acquis de telle sorte que celui-ci décrit une séquence (39) de valeurs de commande (8) données.

6. Arrangement d'éclairage (2) selon l'une des revendications précédentes, **caractérisé en ce que**
- les valeurs de commande (8) sont des valeurs discrètes d'une première résolution de valeur (44) et/ou les valeurs de commande (8) peuvent être appliquées à l'entrée de commande (4) avec une première résolution dans le temps (46) maximale,
- l'unité de commande (24) contient un interpolateur (48) qui est configuré pour associer aux valeurs de commande (8) reçues au niveau de l'entrée de commande (4) des valeurs de luminosité (22) et/ou des valeurs chromatiques (18) d'une deuxième résolution dans le temps (47) plus précise et/ou d'une deuxième résolution de valeur (45) plus précise.

7. Arrangement d'éclairage (2) selon l'une des revendications précédentes, **caractérisé en ce que** l'arrangement d'éclairage (2) est un arrangement d'éclairage (2) pour un espace intérieur (54) sous la forme d'une cabine de passagers et/ou un arrangement d'éclairage (2) pour un véhicule (52) sous la forme d'un aéronef.

8. Véhicule (52), notamment aéronef, **caractérisé en ce qu'**il contient un arrangement d'éclairage (2) selon l'une des revendications 1 à 7.

9. Véhicule (52) selon la revendication 8, lequel possède une infrastructure de commande de lumière (56) servant à piloter une lampe (10) d'un éclairage de véhicule, notamment un éclairage d'espace intérieur, laquelle contient au moins une sortie de commande (58) à laquelle peut être raccordée au moins une lampe (10), l'infrastructure de commande de lumière (56) étant configurée pour délivrer au niveau d'une sortie de commande (58) respective une variable de commande (6) unique qui peut adopter plusieurs valeurs de commande (8),
**caractérisé en ce que**
- l'arrangement d'éclairage (2) est raccordé par son entrée de commande (4) à l'une des sorties de commande (58) .

10. Procédé pour rééquiper un véhicule (52), notamment un aéronef, lequel possède une infrastructure de commande de lumière (56) servant à piloter une lampe (10) d'un éclairage de véhicule, notamment un éclairage d'espace intérieur, laquelle contient au moins une sortie de commande (58) à laquelle peut être raccordée au moins l'une des lampes (10), l'infrastructure de commande de lumière (56) étant configurée pour délivrer au niveau d'une sortie de commande (58) respective une variable de commande (6) unique qui peut adopter plusieurs valeurs
de commande (8),
**caractérisé en ce que**
- lors du rééquipement, au moins un arrangement d'éclairage (2) selon l'une des revendications 1 à 7 est raccordé à au moins l'une des sorties de commande (58) par son entrée de commande (4).

11. Procédé selon la revendication 10, des lampes (10) destinées à produire exclusivement de la lumière monochrome (12) étant raccordées aux sorties de commande (58) avant le rééquipement, dont la luminosité (H) est réglé conformément à la variable de commande (6),
**caractérisé en ce que**
lors du rééquipement, au moins l'une des lampes (10) est remplacée par l'arrangement d'éclairage (2).
